# EUROPEAN PATENT APPLICATION

(11) **EP 1 731 738 A1**
(43) Date of publication of application: **13.12.2006**
(21) Application number: 05721630.1
(22) Date of filing: 22.03.2005
(51) Int. Cl.: F02D 35/00, F02D 45/00, F02P 5/15, F02P 7/067

(54) **CRANK ANGLE DETECTION DEVICE AND IGNITION TIMING CONTROL DEVICE FOR INTERNAL COMBUSTION ENGINE**

(30) Priority: 02.04.2004 JP 2004109715
(71) Applicant: Keihin Corporation, Tokyo 163-0539 (JP)
(72) Inventor: NAMARI, Takashi, KEIHIN CORPORATION, Takanezawa-machi, Tochigi 3291233 (JP); TOKUGAWA, Kazuhito, KEIHIN CORPORATION, Takanezawa-machi, Tochigi 3291233 (JP); CHIDA, Satoshi, KEIHIN CORPORATION, Takanezawa-machi, Tochigi 3291233 (JP)
(74) Representative: Staudt, Hans-Peter
(86) International application number: PCT/JP2005/005981
(87) International publication number: WO 2005/095775

(57) **Abstract**

A crank angle detector and an ignition timing controller comprises a rotor rotated in association with a crank shaft of an internal combustion engine and having detection portions to be detected at equivalent angle intervals in the outer circumference; and a pickup arranged in the vicinity of the outer circumference of the rotor, for generating a pulse signal when the detection portions each pass; wherein one detection portion located immediately before the crank angle corresponding to the upper dead point of a piston of the internal combustion engine, of the detection portions is set to detect a reference angle of the crank angle.

## Description

### Technical Field

The present invention relates to a crank angle detector of an internal combustion engine and an ignition timing controller.

### Background Art

When fuel injection timing for injecting and supplying fuel to an internal combustion engine by an injector and ignition timing for electrically sparking at an ignition plug are controlled, a rotating angle position, i.e., a crank angle from a reference position of the crank shaft of the engine is detected by a crank angle detector, and the timings are respectively set on the basis of the detected crank angle.

In a conventional crank angle detector for detecting the rotating angle of the crank shaft of the internal combustion engine, a disk-shape rotor rotated in association with the crank shaft and an electromagnetic pickup arranged at the vicinity of the outer circumference of the rotor are used. Convex portions or a concave portions constructed by a plurality of magnetic materials are arranged as detection portions to be detected on the outer circumference of the rotor or the vicinity of the outer circumference for each predetermined angle. When the rotor is rotated in association with the crank shaft and each of the detection portions passes the vicinity of the electromagnetic pickup, a pulse is generated from the electromagnetic pickup. Further, a reference position time point of the rotating angle of the crank shaft is detected by missing the detection portion corresponding to the reference position of the rotating angle of the crank shaft, by generating a comparatively long period for generating no pulse, or by generating a pulse of a mode different from that of another detection portion. The pulse is counted on the basis of the reference position time point, and the fuel injection timing and the ignition timing are set (see JP-A-59-31406, JP-A-59-173562 and JP-A-6-17735).

It is also recently required to clean exhaust gas in an internal combustion engine of a small exhaust amount used in a compact vehicle such as an autobicycle, etc. Therefore, a fuel injector is also adopted even in an internal combustion engine for performing manual cranking by a kick start, etc. in which no starter motor for starting cranking is equipped. The fuel injection timing and the ignition timing are controlled on the basis of the crank angle.

However, in an ignition timing controller using the conventional crank angle detector, a crank angle can be exactly determined until the crank shaft is rotated once. Accordingly, a problem exists in that no appropriate initial explosion timing can be given while the reverse rotation of the engine is avoided at the manual cranking time of the internal combustion engine.

### Disclosure of the Invention

An object of the present invention is to provide a crank angle detector and an ignition timing controller which are capable of giving appropriate initial explosion timing at the manual cranking time of an internal combustion engine.

A crank angle detector according to the present invention comprises: a rotor rotated in association with a crank shaft of an internal combustion engine and having a plurality of detection portions to be detected at equivalent angle intervals on the outer circumference; and a pickup arranged at the vicinity of the outer circumference of the rotor, for generating a pulse signal when the plurality of detection portions each pass therethrough; wherein one detection portion located immediately before a crank angle corresponding to the upper dead point of a piston of the internal combustion engine, of the plurality of detection portions is set to detect a reference angle of the crank angle.

An igniting period controller according to the present invention comprises: crank angle detecting means rotated in association with a crank shaft of an internal combustion engine, for generating a crank angle pulse signal for each rotation of a predetermined angle, and generating the pulse signal immediately before the crank angle corresponding to the upper dead point of a piston of the internal combustion engine, as a reference pulse signal of an aspect different from that of the other crank angle pulse signal; and ignition control means for controlling ignition timing of the internal combustion engine in accordance with the crank angle pulse signal; wherein the ignition control means instructs spark discharge of an ignition plug of the internal combustion engine for the ignition timing in accordance with the crank angle pulse signal generated immediately after the reference pulse signal in a period until the crank shaft is rotated once after cranking of the internal combustion engine is started.

### Brief Description of Drawings

Fig. 1 is a block diagram showing an embodiment of the present invention;
Fig. 2 is a view concretely showing a rotor of a crank angle detector;
Fig. 3 is a view showing the relation of a convex portion of the rotor and a signal waveform of each portion of the device of Fig. 1;
Fig. 4 is a flow chart showing crank synchronous processing;
Fig. 5 is a flow chart showing a continuing portion of the crank synchronous processing of Fig. 4; and
Fig. 6 is a flow chart showing ignition switching processing.

### Detailed Description of the Invention

An embodiment of the present invention will next be explained in detail with reference to the drawings.

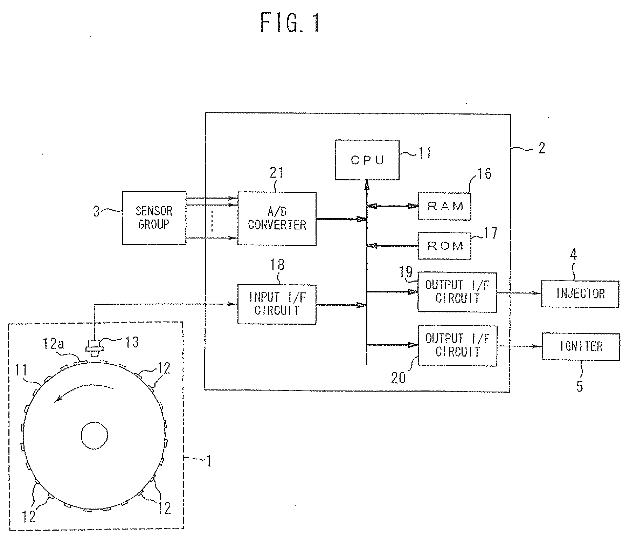

Fig. 1 shows an engine controller to which a crank angle detector of the present invention is applied. The engine controller has the crank angle detector 1, an ECU (electronic control unit) 2, a sensor group 3, an injector 4 and an igniter 5.

The crank angle detector 1 has a disk-shaped rotor 11 coupled to an unillustrated crank shaft of a four-cycle internal combustion engine. The rotor 11 is rotated in association with the rotation of the crank shaft. The rotor 11 has 24 convex portions 12 which are constructed by a magnetic material. The convex portions 12 are continuously arranged as a detection portion to be detected at intervals of 15 degrees on the outer circumferential surface of the rotor 11. An electromagnetic pickup 13 is arranged at the vicinity of the outer circumference of the rotor 11. When the rotor 11 is rotated and each of the convex portions 12 passes the vicinity of the electromagnetic pickup 13, a pair of negative and positive pulses are generated from the electromagnetic pickup 13. These negative and positive pulses are generated as a crank angle pulse signal.

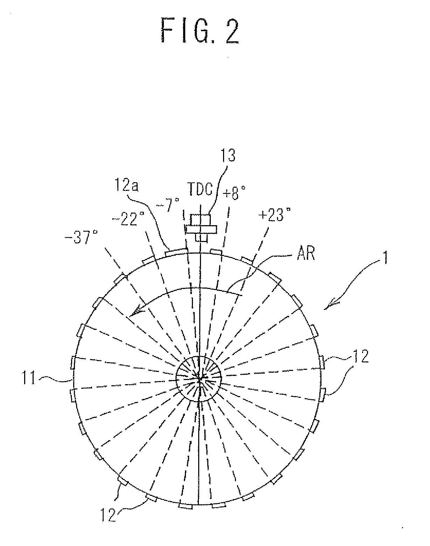

As concretely shown in Fig. 2, the 24 convex portions 12 formed or the outer circumferential surface of the rotor 11 are arranged at the intervals of 15 degrees (shown by a broken line in Fig. 2) with respect to a rear end position in the rotating direction (arrow direction AR) of the rotor 11. In Fig. 2, the interval angles of 15 degrees are shown by an angle from the position of TDC showing an upper dead point in compression of a piston. Further, one convex portion 12a of the 24 convex portions 12 is a convex portion showing a reference angle of the crank angle. The reference angle is located in the rear end position of the convex portion 12a in the rotating direction of the rotor 11, and is also located in a position of -7 degrees from TDC showing the upper dead point in compression of the piston in 360 degrees of the rotor 11. Further, the convex portion 12a is formed so as to be long in the rotating direction of the rotor 11 in comparison with the other convex portions 12. Namely, the length from the rear end position to its front end position of the convex portion 12a to the front end position is set to be longer in comparison with the other convex portions 12. Detection timing with respect to the front end position of the convex portion 12a using the electromagnetic pickup 13 is set to be faster than the detection timings with respect to the front end positions of the other convex portions 12. When the rotor 11 is rotated in the rotating direction, the rear end of the convex portion 12 detected next to the convex portion 12a is located within a range of 0 to 10 degrees from TDC. The rear end is located in a range of 8 degrees in this embodiment. A pulse signal corresponding to the long convex portion 12a as the above crank angle pulse signal is a reference pulse signal.

The ECU 2 is connected to the output of the electromagnetic pickup 13. The ECU 2 has a CPU 15, a RAM 16, a ROM 17, an input interface (I/F) circuit 18, output interface circuits 19, 20 and an A/D converter 21.

The input interface circuit 18 shapes the waveforms of negative and positive pulses output from the electromagnetic pickup 13 to individually generates a front end position pulse and a rear end position pulse, and supplies these pulses to the CPU 15. For example, the input interface circuit 18 generates the front end position pulse by comparing the negative pulse with a predetermined negative voltage, and also generates the rear end position pulse by comparing the positive pulse with a predetermined positive voltage. In the CPU 5, a counter for individually counting a generating interval (time period) from one front end position pulse to the next front end position pulse and a generating interval from one rear end position pulse to the next rear end position pulse generated from the input interface circuit 18 is formed by program processing.

The CPU 15 repeatedly executes crank synchronous processing described later, for detecting the reference angle of the crank angle and a crank stage, and controlling ignition timing in accordance with the detected result. Further, the CPU 15 performs fuel injection control. However, the fuel injection control is not concretely explained in this embodiment. The CPU 15, the RAM 16, the ROM 17, the input interface circuit 18, the output interface circuits 19, 20 and the A/D converter 21. are commonly connected to a bus.

The output interface circuit 19 drives the injector 4 in accordance with an injector driving instruction from the CPU 15. The injector 4 is arranged at the vicinity of an intake port of an intake pipe of the internal combustion engine, and injects fuel when the injector 4 is driven. The output interface circuit 20 activates the igniter 5 in accordance with an electric supply starting instruction and an ignition starting instruction from the CPU 15. Namely, electric supply to an unillustrated ignition coil of the igniter 5 is started in accordance with the electric supply starting instruction, and is stopped in accordance with the ignition starting instruction, and a spark is made by discharge at an unillustrated ignition plug. For example, the igniter 5 is an igniter of a full transistor type which flows an electric current to the ignition coil and generates a high voltage by electric charge accumulated in the ignition coil, and applies the high voltage to the ignition plug.

The A/D converter 21 is arranged to convert an analog signal from the sensor group 3 for detecting engine operating parameters such as intake pipe internal pressure P_{B}, cooling water temperature TW, a throttle opening degree θₜₕ, and oxygen concentration O₂ within exhaust gas which are required in engine control, into a digital signal.

The ignition timing controller is constructed by at least the crank angle detector 1 and the ECU 2 within the above construction.

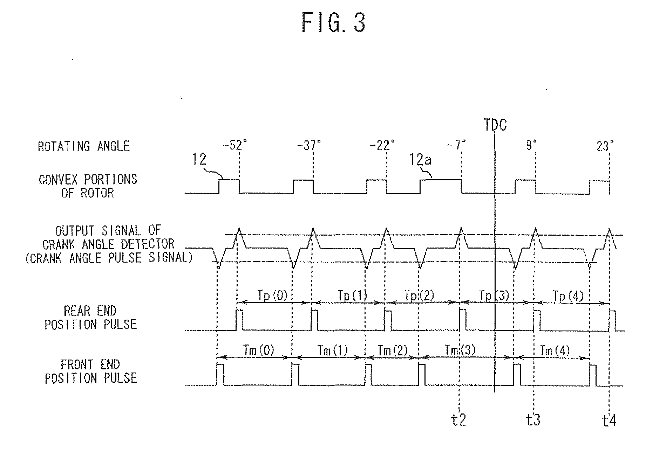

In the engine controller having the above construction, as shown in Fig. 3, an output signal of the electromagnetic pickup 13 becomes a negative pulse of an inverse triangular shape with respect to the front end of the convex portion 12 (including 12a) of the rotor 11, and becomes a positive pulse of a triangular shape with respect to the rear end. In the input interface circuit 18, the negative pulse is shaped in waveform to become a front end position pulse of a rectangular shape. The positive pulse is shaped in waveform to become a rear end position pulse of a rectangular shape. The front end position pulse and the rear end position pulse from the input interface circuit 18 are supplied to the CPU 15 at their generating times. The CPU 15 measures a generating interval Tm of the front end position pulse by interruption processing at the generating time of the front end position pulse, and measures a generating interval Tp of the rear end position pulse by the interruption processing at the generating time of the rear end position pulse.

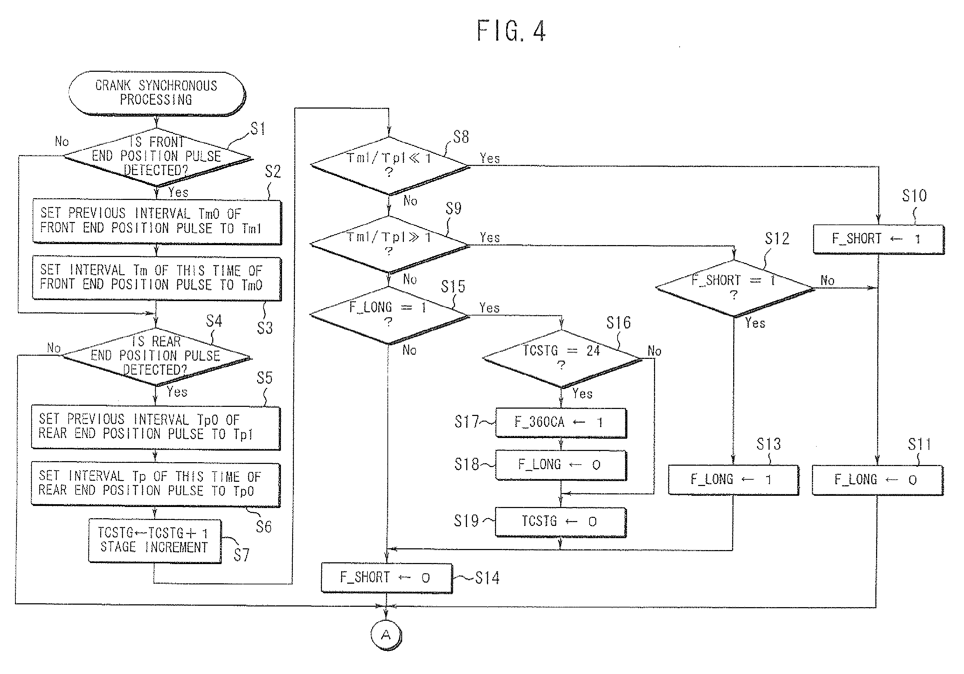

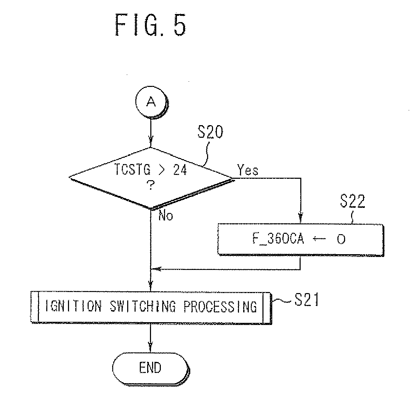

As shown in Figs. 4 and 5, in the crank synchronous processing, the CPU 15 first judges whether the generation of the front end position pulse is detected or not (step S1). When the CPU 15 detects the generation of the front end position pulse, the CPU 15 sets the previous generating interval Tm0 of the front end position pulse to Tm1 (step S2), and sets the generating interval Tm of this time to Tm0 (step S3). Thereafter, it proceeds to a step S4.

When the CPU 15 does not detect the generation of the front end position pulse in the step S1, it is judged whether the generation of the rear end position pulse is detected or not (step S4). When the generation of the rear end position pulse is detected, the previous generating interval Tp0 of the rear end position pulse is set to Tp1 (step S5), and the generating interval Tp of this time is set to Tp0 (step S6). Further, a crank stage TCSTG is increased by one (step S7). The crank stage TCSTG shows one of stages 0 to 23 at the equivalent angle intervals divided by the convex portions 12.

After the execution of the step S7, the CPU 15 judges whether Tm1/Tp1 is sufficiently smaller than one or not (step S8). When Tm1/Tp1 << 1 is not formed, it is judged whether Tm1/Tp1 is sufficiently larger than one or not (step S9). Namely, in the step S8, it is judged whether the detecting time of the previous generating interval Tm1 lay immediately before the long convex portion 12a or not. In the step S9, it is judged whether the detecting time of the previous generating interval Tm1 lay in a portion including the long convex portion 12a or not. In Fig. 3, when Tm1=Tm(2) and Tp1=Tp(2) are detected, Tm1/Tp1 << 1 is formed. When Tm1=Tm(3) and Tp1=Tp(3) are detected, Tm1/Tp1 >> 1 is formed.

When the judging result of the step S8 shows Tm1/Tp1 << 1, a flag F_SHORT is set to be equal to 1 (step S10) and a flag F_LONG is set to be equal to 0 (step S11). When the flag F_SHORT is 1, it shows a state immediately before the long convex portion 12a. When the flag F_SHORT is 0, it shows time except for this state. When the flag F_LONG is 1, it shows a detecting time of the long convex portion 12a. When the flag F_LONG is 0, it shows a non-detecting time of the long convex portion 12a.

When the judging result of the step S9 shows Tm1/Tp1 >> 1, i.e., when the detecting time of the previous generating interval Tm1 lay in a range including the long convex portion 12a, it is judged whether the flag F_SHORT is equal to 1 or not (step S12). If F_SHORT = 0, it proceeds to the step S11 and the flag F_LONG is set to be equal to 0. If F SHORT = 1, the long convex portion 12a is detected after the usual convex portion 12 is detected. The flag F_LONG is thus set to be equal to 1 (step S13). Then, the flag F SHORT is set to be equal to 0 (step S14).

When the judging result of the step S9 does not show Tm1/Tp1 >> 1, it is judged whether the flag F_LONG is 1 or not (step S15). If the flag F_LONG = 0, it proceeds to the step S14 and the flag F_SHORT is set to be equal to 0. In contrast to this, if the flag F_LONG = 1 is formed, it is judged whether the crank stage TCSTG is 24 or not (step S16). If TCSTG = 24 is formed, a flag F_360CA is set to be equal to 1 (step S17), and the flag F_LONG is set to be equal to 0 (step S18). Further, the crank stage TCSTG is reset to 0 (step S19). When the flag F_360CA is 1, it shows a detecting time at which the rotor 11 is reliably rotated once at the cranking time of the engine. When the flag F 360CA is 0, it shows a non-detecting time of one rotation of the rotor 11.

If TCSTG ≠ 24 in the step S16, it proceeds to the step 319 by jumping steps S17 and S18, and the crank stage TCSTG is reset to 0. After the step S19 is executed, it proceeds to the step S14 and the flag F_SHORT is set to be equal to 0.

After the step S11 or S14 is executed, the CPU 15 judges whether the crank stage TCSTG is greater than 24 or not (step S20). The step S20 is also immediately executed when the judging result of the step S4 shows non-detection of the generation of the rear end position pulse. If TCSTG ≤ 24, it proceeds to ignition switching processing (step S21). In contrast to this, if TCSTG > 24, the flag F_360CA is set to be equal to 0 (step S22). Thereafter, it proceeds to the ignition switching processing of the step S21. The ignition switching processing is processing for switching between initial explosion ignition and normal ignition of the engine.

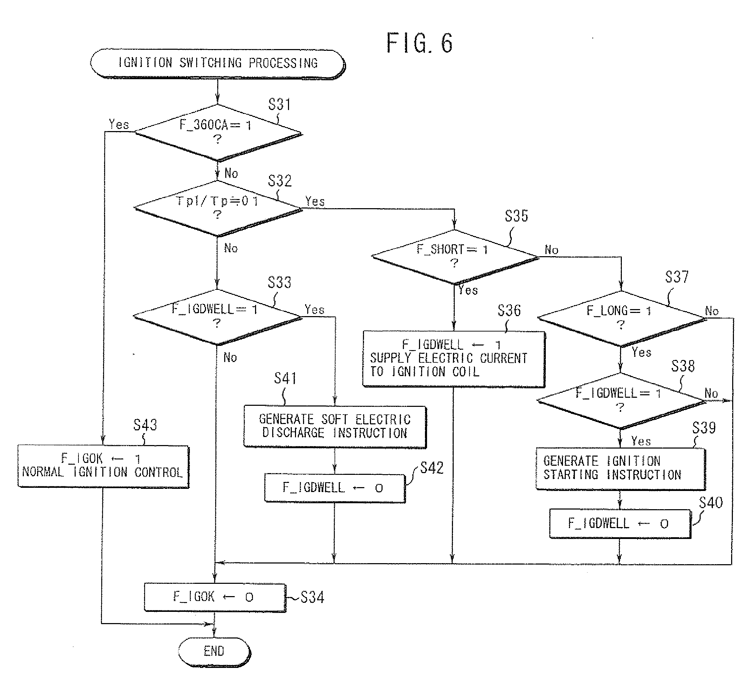

As shown in Fig. 6, in the ignition switching processing, the CPU 15 first judges whether the flag F_360CA is equal to 1 or not (step S31). In the case of F_360CA = 0, it is not detected that the rotor 11 is rotated once at the cranking time of the engine. Accordingly, it is judged whether Tp1/Tp0 is approximately equal to 1 or not (step S32). Namely, it is judged whether or not the previous generating interval Tp1 of the rear end position pulse and the generating interval Tp0 of this time are approximately equal to each other and the crank shaft is in a state approximately constantly rotated. If Tp1/Tp0 ≒ 1 is not formed, it is judged whether a flag F_IGDWELL is equal to 1 or not (step S33). When the flag F_IGDWELL is 1, it shows an electric supplying time of the ignition coil. When the flag F_IGDWELL is 0, it shows no electric supplying time of the ignition coil. If the flag F_IGDWELL = 0, a flag F_IGOK is set to be equal to 0 (step S34), and the ignition switching processing is terminated. When the flag F_IGOK is 1, it shows allowance of the normal ignition. When the flag F_IGOK is 0, it shows unallowance of the normal ignition.

If the judging result of the step S32 shows Tp1/Tp0 ≒ 1, it is judged whether the flag F_SHORT is equal to 1 or not (step S35). If F_SHORT = 1, the flag F_IGDWELL is set to be equal to 1 (step S36), and an electric current is supplied to the ignition coil. Namely, the CPU 15 generates the electric supply starting instruction to the igniter 5. Thus, the igniter 5 starts the electric current supply to the ignition coil. In Fig. 3, when the judgment with respect to a time point t2 is made, the electric current supply to the ignition coil for the initial explosion at the cranking time is started. After the step S36 is executed, it proceeds to a step S24.

In contrast to this, if F_SHORT = 0, it is judged whether the flag F_LONG is equal to 1 or not (step S37). If F_LONG = 1, it is immediately before the detection of the long convex portion 12a. Accordingly, it is judged whether the flag F_IGDWELL is equal to 1 or not, i.e., whether the electric current is supplied to the ignition coil or not (step S38). If F_IGDWELL = 1, the electric current is supplied to the ignition coil at the previous stage. Accordingly, the ignition starting instruction is generated to the igniter 5 (step S39), and the flag F_IGDWELL is set to be equal to 0 (step S40). The ignition starting instruction of the step S39 is an instruction of the initial explosion ignition. Thus, the igniter 5 stops the electric current supply to the ignition coil, and allows to generate a spark discharge at the ignition plug. In Fig. 3, the spark discharge of the initial explosion is started in the ignition plug when the judgment with respect to a time point t3 is made. After the step S40 is executed, it proceeds to the step S24. when the judging result of the step S37 shows F_LONG = 0, or when the judging result of the step S38 shows F_IGDWELL = 0, it immediately proceeds to the step S24.

If the judging result of the step S33 shows F_IGDWELL = 1, the electric current is supplied to the ignition coil. Accordingly, a soft electric discharge instruction is generated to the igniter 5 (step S41), and the flag F IGDWELL is set to be equal to 1 (step S42). The igniter 5 discharges electric charge accumulated in the ignition coil to e.g., a ground line without sparking by stopping the electric current supply to the ignition coil in accordance with the soft electric discharge instruction. After the step S42 is executed, it proceeds to the step S24.

If the judging result of the step S33 shows F_360CA = 1, it is detected that the rotor 11 is rotated once at the cranking time of the engine. Accordingly, the flag F_IGOK is set to be equal to 1 (step S43). After F_IGOK = 1 is formed, the CPU 15 generates the electric supply starting instruction to the igniter 5 when the crank stage TCSTG is an electric supply starting stage. When the crank stage TCSTG is an ignition starting stage, the CPU 15 generates the ignition starting instruction to the igniter 5. The electric supply starting stage and the ignition starting stage are set in advance. In Fig. 3, when the judgment with respect to a time point t4 is made, one rotation of the rotor 11 is detected so that the ignition timing control is switched from the initial explosion ignition to the normal ignition.

In the above embodiment, each of the convex portions 12 is formed as the detection portion to be detected in the rotor 11, but concave portions may be also formed as the detection portions on the outer circumferential surface of the rotor 11. Further, the detection portion may be buried and may be also formed as a mark on the outer circumferential surface without forming the detection portion as uneven portions on the outer circumferential surface of the rotor 11.

Further, in the above embodiment, the spark discharge using the ignition plug is instructed in accordance with the crank angle pulse signal generated next to the reference pulse signal in a period until the crank shaft is rotated once after the cranking start of the internal combustion engine. However, the spark discharge using the ignition plug may be also instructed in accordance with the crank angle pulse signal (e.g., a second crank angle pulse signal from the reference pulse signal) newly generated immediately after the reference pulse signal.

In the above embodiment, the detection portion is detected by the electromagnetic pickup 13, but the present invention is not limited to the construction. The detection portion may be also optically detected.

Further, in the above embodiment, the explanation is made with respect to the case in which the present invention is applied to the four-cycle internal combustion engine of a single cylinder. However, the present invention can be also applied to the four-cycle internal combustion engine of multiple cylinders, or the internal combustion engine of two cycles.

Further, the present invention is not limited to the full transistor system as the igniter, but can be also applied to a DC-CDI system.

As mentioned above, according to the present invention, appropriate initial explosion timing can be given in a period until the crank shaft is rotated once at the manual cranking time. The engine can be smoothly started while the reverse rotation of the engine is avoided. In particular, a preferable starting property can be obtained by only giving slight rotation to the engine by a kick starter, etc. in the manual cranking.

## Claims

1. A crank angle detector comprising:
a rotor rotated in association with a crank shaft of an internal combustion engine and having a plurality of detection portions to be detected at equivalent angle intervals on the outer circumference; and
a pickup arranged at the vicinity of the outer circumference of said rotor, for generating a pulse signal when said plurality of detection portions each pass therethrough;
wherein one detection portion located immediately before a crank angle corresponding to the upper dead point of a piston of said internal combustion engine, of said plurality of detection portions is set to detect a reference angle of the crank angle.

2. The crank angle detector according to claim 1, wherein said plurality of detection portions are constructed by projections, respectively, and the one detection portion for detecting said reference angle is set to a length different from the lengths of the other detection portions in the outer circumferential direction of said rotor.

3. The crank angle detector according to claim 2, wherein the one detection portion for detecting said reference angle is longer than said other detection portions in the outer circumferential direction of said rotor.

4. The crank angle detector according to claim 1, wherein the respective rear end positions of the plurality of detection portions are located at equivalent angle intervals in the rotating direction of said rotor, and the length from the rear end position to the front end position of the one detection portion for detecting said reference angle is different from the length from the rear end position to the front end position of each of said other detection portions.

5. The crank angle detector according to claim 4, wherein, when the respective rear end positions of the plurality of detection portions are located at equivalent angle intervals of 15 degrees in the rotating direction of said rotor, the rear end of a detection portion passing through the vicinity of said pickup next to the one detection portion for detecting said reference angle at a rotating time of said rotor is located within a range of zero to ten degrees from the crank angle corresponding to said upper dead point.

6. An ignition timing controller comprising:
crank angle detecting means rotated in association with a crank shaft of an internal combustion engine, for generating a crank angle pulse signal for each rotation of a predetermined angle, and generating the pulse signal immediately before the crank angle corresponding to the upper dead point of a piston of said internal combustion engine, as a reference pulse signal of an aspect different from that of the other crank angle pulse signal; and
ignition control means for controlling ignition timing of said internal combustion engine in accordance with said crank angle pulse signal;
wherein said ignition control means instructs spark discharge of an ignition plug of said internal combustion engine for the ignition timing in accordance with said crank angle pulse signal generated immediately after said reference pulse signal in a period until said crank shaft is rotated once after cranking of said internal combustion engine is started.

7. The ignition timing controller according to claim 6, wherein said ignition control means controls electric supply timing to an ignition coil in accordance with said reference pulse signal before the instruction of the spark discharge of said ignition plug in the period until said crank shaft is rotated once after the cranking of said internal combustion engine is started.

8. The crank angle detector according to claim 6, wherein said crank angle detecting means comprises:
a rotor rotated in association with the crank shaft of said internal combustion engine and having a plurality of detection portions to be detected at equivalent angle intervals on the outer circumference; and
a pickup arranged at the vicinity of the outer circumference of said rotor, for generating said crank angle pulse signal when said plurality of detection portions each pass therethrough;
wherein one detection portion located immediately before the crank angle corresponding to the upper dead point of the piston of said internal combustion engine, of said plurality of detection portions is set to generate said reference pulse signal, and the respective rear end positions of the plurality of detection portions are located at equivalent angle intervals in the rotating direction of said rotor, and the length from the rear end position to the front end position of the one detection portion for generating said reference pulse signal is different from the length from the rear end position to the front end position of each of said other detection portions.

9. The ignition timing controller according to claim 6 or 8, wherein said crank angle pulse signal including said reference pulse signal is constructed by a negative pulse and a positive pulse constituting a pair, and said negative pulse is generated correspondingly to the front end of each of said detection portions, and said positive pulse is generated correspondingly to the rear end of each of said detection portions.

10. The ignition timing controller according to claim 6 or 9, wherein said ignition control means discriminates said reference pulse signal in accordance with the magnitude of a ratio of the generating interval of said negative pulse and the generating interval of said positive pulse.

11. The ignition timing controller according to claim 6 or 9, wherein said ignition control means instructs an electric supply to said ignition coil when a value provided by dividing the generating interval of said negative pulse by the generating interval of said positive pulse is sufficiently smaller than one in the period until said crank shaft is rotated once after the cranking of said internal combustion engine is started, and then also instructs the spark discharge of said ignition plug when the value provided by dividing the generating interval of said negative pulse by the generating interval of said positive pulse is sufficiently greater than one.
